Europäisches Patentamt

European Patent Office

Office européen des brevets

(19)

(11) Veröffentlichungsnummer: **0 241 700**
**B1**

(12) **EUROPÄISCHE PATENTSCHRIFT**

(45) Veröffentlichungstag der Patentschrift:
**12.07.89**

(21) Anmeldenummer: **87103326.2**

(22) Anmeldetag: **09.03.87**

(51) Int. Cl.⁴: **F16L 39/04,** F16C 11/04,
B25J 17/02

(54) **Dreh- und/oder Schwenkgelenk.**

(30) Priorität: **15.03.86 DE 3608782**

(43) Veröffentlichungstag der Anmeldung:
**21.10.87 Patentblatt 87/43**

(45) Bekanntmachung des Hinweises auf die Patenterteilung:
**12.07.89 Patentblatt 89/28**

(84) Benannte Vertragsstaaten:
**AT CH DE FR GB IT LI NL SE**

(56) Entgegenhaltungen:
**DE-B- 1 034 431**
**FR-A- 2 005 524**
**US-A- 3 957 291**

(73) Patentinhaber: **Thyssen Industrie AG, Am Thyssenhaus 1, D-4300 Essen 1(DE)**

(72) Erfinder: **Bölling, Fritz Claus, Am Grabenbach 3, D-3430 Witzenhausen(DE)**
Erfinder: **Sellner, Josef, Liebauerstrasse 29, D-3501 Espenau(DE)**

(74) Vertreter: **Freiherr von Schorlemer, Reinfried, Dipl.-Phys., Patentanwalt Brüder-Grimm-Platz 4, D-3500 Kassel(DE)**

## Beschreibung

Die Erfindung betrifft ein Dreh- und/oder Schwenkgelenk zur dreh- und/oder schwenkbaren Verbindung von zwei Gelenkkörpern, mit einem ersten, in einer Bohrung eines der Gelenkkörper drehfest angeordneten, innen mit einer ersten kugelschalenförmigen Lagerfläche versehenen Lagerkörper, mit einem zweiten, mit dem anderen Gelenkkörper drehfest verbundenen Lagerkörper, der eine zweite kugelschalenförmige, an der ersten Lagerfläche anliegende, äußere Lagerfläche aufweist, mit einem durch die beiden Gelenkkörper und die Lagerkörper führenden ersten Strömungsweg für ein Fluid und mit Dichtungen zum Abdichten des Strömungswegs.

Bei gelenkig oder drehbar verbundenen Maschinenelementen ist es häufig erwünscht, einen das Gelenk durchlaufenden Strömungsweg für ein Fluid vorzusehen, beispielsweise um die Anwendung von rohr- oder schlauchartigen Übertragungssystemen für das Fluid zu vermeiden bzw. den Strömungsweg für das Fluid vor äußeren Beschädigungen zu schützen. Dies gilt insbesondere in Fällen, in denen ein an einem Träger angebrachtes Bauteil oder ein mit diesem verbundenes Maschinenteil durch hydraulische oder pneumatische Zylinder/Kolben-Einheiten bewegt werden soll, die nicht unmittelbar und/oder nicht starr am Träger befestigt werden können.

Bei bekannten Dreh- und/oder Schwenkgelenken der eingangs bezeichneten Art (DE-A 22 35 172, DE-U 18 69 890) ist nur ein einziger das Gelenk durchsetzender Strömungsweg für ein Fluid vorgesehen. Nachteilig daran ist, daß das Fluid nur in eine Richtung und nur in einer vom Querschnitt des Strömungswegs abhängigen Menge durch den Strömungsweg transportiert werden kann. Wegen der speziellen Konstruktion der bekannten Gelenke ist es auch nicht ohne weiteres möglich, wenigstens einen weiteren, von dem vorhandenen Strömungsweg unabhängigen, zweiten Strömungsweg zu schaffen, ohne die beteiligten Lagerkörper mechanisch zu schwächen oder aufwendige Sonderanfertigungen für die verschiedenen Bauteile vorzusehen.

Der Erfindung liegt daher die Aufgabe zugrunde, das eingangs bezeichnete Dreh- und/oder Schwenkgelenk mit einfachen konstruktiven Mitteln derart auszubilden, daß wenigstens zwei voneinander unabhängige Strömungswege durch das Gelenk führen, die entweder zum Transport größerer Fluidmengen gleichgerichtet oder zum Transport von Fluiden in entgegengesetzte Richtungen entgegengerichtet durchströmt werden können.

Zur Lösung dieser Aufgabe ist die Erfindung dadurch gekennzeichnet, daß wenigstens ein zweiter, durch die beiden Gelenkkörper und die Lagerkörper führender, vom ersten Strömungsweg unabhängiger Strömungsweg und weitere Dichtungen zum Abdichten des zweiten Strömungswegs vorgesehen sind, daß jeder Strömungsweg eine in einem der Lagerkörper ausgebildete, an dessen Lagerfläche grenzende Aussparung und einen in dem anderen Lagerkörper ausgebildeten, an dessen Lagerfläche grenzenden Kanal aufweist, und daß Anschläge zur Festlegung eines zulässigen Dreh- und/oder Schwenkbereichs der beiden Gelenkkörper derart vorgesehen sind, daß jeder Kanal in allen möglichen Dreh- und/oder Schwenklagen der Gelenkkörper innerhalb dieses Bereichs in die ihm zugeordnete Aussparung mündet.

Die Erfindung bringt den Vorteil mit sich, daß trotz Anwendung von weitgehend handelsüblichen bzw. preiswert herzustellenden Bauteilen ein Dreh- und/oder Schwenkgelenk mit wenigstens zwei voneinander unabhängigen Strömungswegen geschaffen wurde, die gleich- oder entgegengerichtet von demselben oder wenigstens zwei unterschiedlichen Fluiden durchströmt werden können. Die Größe der möglichen Dreh- bzw. Schwenkbewegungen der beiden Gelenkkörper ist dabei allein abhängig von der Zahl und der Größe der taschenförmigen Aussparungen. Die Anschläge stellen sicher, daß die vorhandenen Strömungswege in allen zulässigen Dreh- bzw. Schwenkstellungen der beiden Gelenkkörper zwar durchgehend offene, aber gegen das Entweichen des Fluids abgedichtete Strömungskanäle bilden.

Die Erfindung wird nachfolgend in Verbindung mit der beiliegenden Zeichnung anhand eines bevorzugten Ausführungsbeispiels näher erläutert. Es zeigen:

Fig. 1 ein erfindungsgemäßes Dreh- und/oder Schwenkgelenk teilweise im Querschnitt und teilweise aufgebrochen; und

Fig. 2 einen Schnitt längs der Linie A-B in Fig. 1.

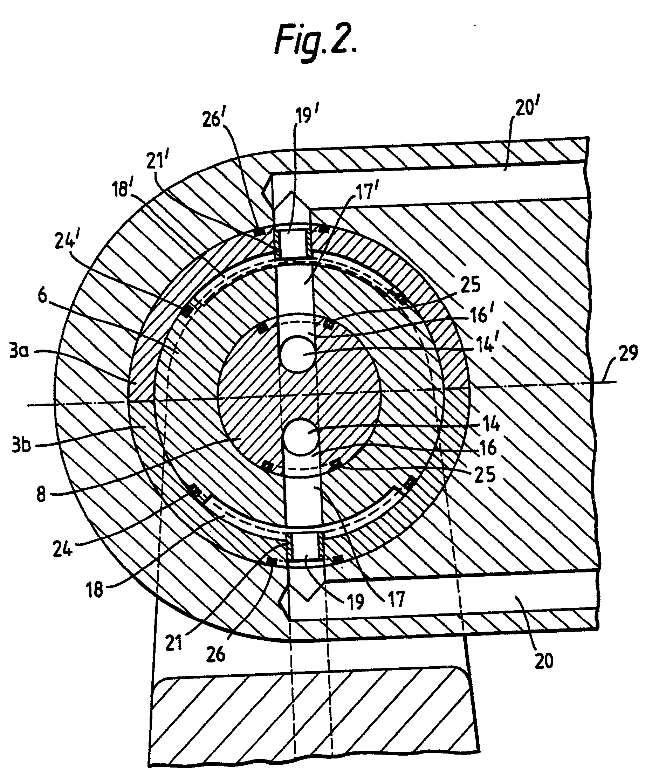

Das Dreh- und/oder Schwenkgelenk besteht im wesentlichen aus einem ersten Gelenkkörper 1 und einem zweiten Gelenkkörper, der als Ganzes mit dem Bezugszeichen 5 versehen ist. Der erste Gelenkkörper 1 weist eine zylindrische Bohrung 2 auf, in der drehfest ein erster Lagerkörper 3 in Form eines Rings angeordnet ist. Der Lagerkörper 3 weist einen zylindrischen Außenmantel und eine erste kugelschalenförmige, innere Lagerfläche 4 auf und ist in einer zu seiner Achse parallelen Ebene in zwei im wesentlichen gleich große Teile 3a und 3b geteilt (Fig. 2). Bei dem Gelenkkörper 1 handelt es sich beispielsweise um einen pneumatischen oder hydraulischen Zylinder, der auf der in Fig. 2 rechten Seite eine nicht dargestellte, mit einem Fluid gefüllte Kammer aufweist, in der ein mit einer Kolbenstange verbundener Kolben beweglich geführt ist.

Der zweite Gelenkkörper 5 besteht vorzugsweise aus einem gabelförmigen Lagerbock 7, der zwei Gabelarme 10 und 10' mit zylindrischen Bohrungen aufweist, die von einem zylindrischen Gelenkbolzen 8 durchragt sind. Auf den zwischen den beiden Armen 10, 10' befindlichen Teil des Bolzens 8 ist ein zweiter Lagerkörper 6 in Form eines Rings mit einer zylindrischen Innenfläche aufgezogen, der eine zweite kugelschalenförmige, an der Lagerfläche 4 des ersten Lagerkörpers 3 anliegende, äußere Lagerfläche 6a aufweist. Der Bolzen 8 ist durch formschlüssige Drehsicherungen drehfest mit dem Lagerkörper 6 und den Armen 10,10' verbunden, zu welchem Zweck eine allen drei Teilen gemeinsame Nut/Feder-Verbindung 9 vorgesehen sein kann. Die drehfeste Verbindung dieser Teile kann auch mit anderen Mitteln oder dadurch erfolgen, daß der Bolzen 8 und die Innenfläche des Lagerkörpers 6 andere als zylindrische Querschnitte aufweisen.

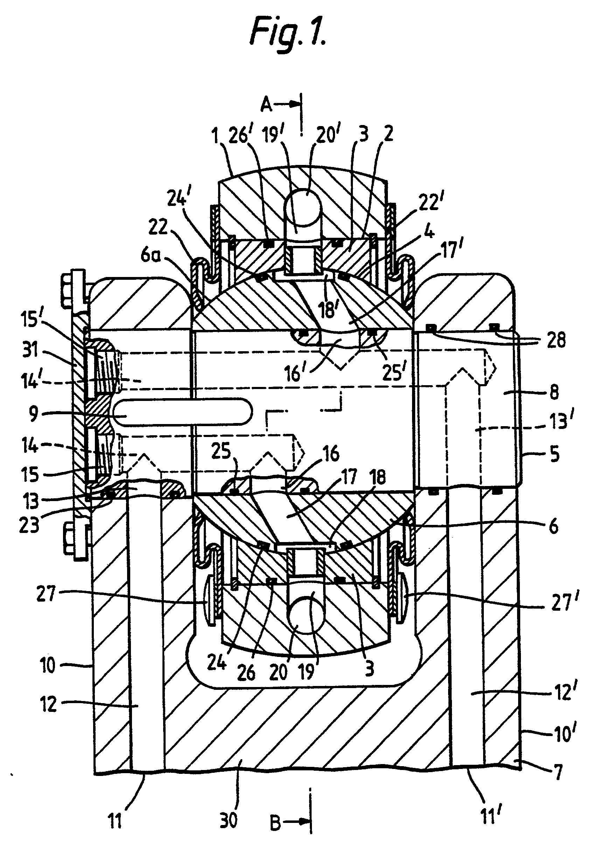

Bei dem beschriebenen Dreh- und/oder Schwenkgelenk ist entweder einer der beiden Gelenkkörper relativ zum anderen, ortsfest angeordneten Gelenkkörper dreh- und/oder schwenkbar gelagert, oder es sind beide Gelenkkörper relativ zueinander dreh- und/oder schwenkbar angeordnet, indem beispielsweise der Lagerbock 7 an ein Fahrzeug, der Gelenkkörper 1 dagegen mit seinem in Fig. 2 nicht sichtbaren Ende an ein schwenkbar vom Fahrzeug getragenes Teil angelenkt ist. Die relativen Dreh- und/oder Schwenkbewegungen der beiden Gelenkkörper können beispielsweise um die Achse des Bolzens 8, um eine in der Schnittlinie A-B (Fig. 1) liegende Achse und um eine senkrecht zu beiden Achsen angeordnete Achse erfolgen, in welchem Fall das Gelenk drei Freiheitsgrade besitzt.

Damit ein Fluid durch dieses Drehgelenk strömen kann, sind zwei voneinander unabhängige Strömungswege vorgesehen, die jeweils aus hintereinander angeordneten, für beide Strömungswege im wesentlichen gleich ausgebildeten Kanälen zusammengesetzt sind.

In jedem Arm 10,10' des Gelenkkörpers 5 ist je ein in dessen Längsrichtung erstreckter, geradliniger Kanal 12,12' vorgesehen, der an einer zugeordneten Ein- oder Auslaßöffnung 11,11' beginnt und in die zugeordnete Aufnahmebohrung für den Bolzen 8 mündet. In der Verlängerung jedes Kanals 12,12' ist je ein im Bolzen 8 ausgebildeter Kanal 13,13' vorgesehen, der in je einen zur Bolzenachse parallelen Kanal 14 bzw. 14' übergeht. Die Kanäle 14,14' bestehen aus Sackbohrungen, die nach außen durch je einen durch einen Deckel 31 gesicherten Verschlußstopfen 15,15' dicht verschlossen sind und mit je einem weiteren Kanal 16,16' im Bolzen 8 in Verbindung stehen, der an der Umfangsfläche des Bolzens 8 endet und dort in einen durch den Lagerkörper 6 erstreckten weiteren Kanal 17 bzw. 17' übergeht. Die jeweils anderen Enden dieser Kanäle 17,17' münden in je eine taschenförmige Aussparung 18 bzw. 18', die in die Lagerfläche 6a des Lagerkörpers 6 eingearbeitet ist. Die Längsachsen beider Kanäle 17 und 17' können sich in Abhängigkeit von den Forderungen, die an die mechanische Stabilität des Gelenks gestellt werden, radial zur Bolzenachse oder auch, wie in Fig. 1 gezeigt, schräg zu dieser erstrecken. Die beiden taschenförmigen Aussparungen 18,18' erstrecken sich vorzugsweise jeweils beiderseits der Äquatorebene des Lagerkörpers 6, die in Fig. 1 durch die senkrecht zur Zeichenebene verlaufende und die Schnittlinie A-B enthaltende Ebene gebildet ist.

An jede Aussparung 18,18' schließt sich ein weiterer Kanal 19,19' an, der durch den Lagerkörper 3 bis in den Gelenkkörper 1 verläuft und dort in einen weiteren Kanal 20 bzw. 20' mündet, wie insbesondere Fig. 2 zeigt.

Die beiden voneinander unabhängigen Strömungswege, die durch die Kanäle 12 bis 14 und 16 bis 20 bzw. 12' bis 14' und 16' bis 20' gebildet sind, dienen zum Transport eines Fluids zwischen den Anschlußenden 11,11' und den in Fig. 2 nicht dargestellten Anschlußenden der Kanäle 20,20'. Diese können, falls der Gelenkkörper 1 beispielsweise als Zylinder ausgebildet ist, auf je einer Seite des zugehörigen Kolbens in die das Fluid aufnehmende Kammer münden, um das Fluid je nach Anwendungsfall zu- oder abzuführen.

Die beim Ausführungsbeispiel im Lagerkörper 6 ausgebildeten taschenförmigen Aussparungen 18,18' können alternativ auch in der Lagerfläche 4 des Lagerkörpers 3 ausgebildet und in diesem Fall beiderseits der Äquatorebene des Lagerkörpers 3 erstreckt sein. Außerdem ist bei beiden Ausführungsbeispielen vorzugsweise die eine Aussparung 18 auf einer Seite und die andere Aussparung 18' auf der anderen Seite einer Meridianebene des Lagerkörpers 6 bzw. 3 angeordnet, die in Fig. 2 senkrecht zur Zeichenebene verläuft und eine senkrecht zur Bolzenachse verlaufende Linie 29 enthält.

Die sich gegenseitig berührenden Teile des Dreh- und/oder Schwenkgelenks sind im Bereich der Kanäle und der taschenförmigen Aussparungen mit Dichtungen 23,24,24',25,25',26,26' und 28 versehen. Dabei sind vorzugsweise die Dichtungen 23,25,25',26 und 26' als die Kanäle 12,12',13,13',16,16',17,17' bzw. 19 und 19' konzentrisch umfassende O-Ringe ausgebildet, die in entsprechende, in dem Bolzen 8 bzw. in die zylindrische Außenfläche des Lagerkörpers 3 eingearbeitete Nuten eingelegt sind, während die die taschenförmigen Aussparungen 18,18' abdichtenden Dichtungen 24,24' vorzugsweise aus O-Ringen oder profilierten Ringen bestehen, die in Nuten eingelegt sind, welche die Aussparungen 18,18' umgeben und in die Lagerfläche 6a des Lagerkörpers 6 eingearbeitet werden. Die Dichtungen 28 bestehen zweckmäßig aus radial zur Bolzenachse angeordneten O-Ringen, die in entsprechende Nuten in den Aufnahmebohrungen der Arme 10,10' eingelegt sind.

Die zulässigen Dreh- und/oder Schwenkbewegungen der beiden Gelenkkörper 1 und 5 zueinander sind im wesentlichen durch die Abmessungen der Aussparungen 18,18' und die einen kleineren Querschnitt als diese aufweisenden Kanäle 19,19' begrenzt, da die durch das Dreh- und/oder Schwenkgelenk transportierten Fluide nur dann strömen können, wenn die Aussparungen 18,18' und Kanäle 19,19' strömungsmäßig miteinander in Verbindung stehen. Zur Begrenzung der Dreh- und/oder Schwenkbewegungen sind dabei zweckmäßig Buchsen 21,21' vorgesehen, die in die Kanäle 19,19' eingesteckt sind, in die Aussparungen 18,18' ragen und dadurch als Anschläge wirken, die an den Enden der zulässigen Dreh- bzw. Schwenkbewegungen an die Begrenzungswände der Aussparungen 18,18' anstoßen und dadurch den zulässigen Dreh- und/oder Schwenkbereich des Gelenks festlegen. Innerhalb dieses Bereichs münden die Kanäle 19,19' stets in die zugeordneten Aussparungen 18 bzw. 18', so daß die Strömungswege in jeder Dreh- und/oder Schwenklage voll funktionsfähig sind. Alternativ können die möglichen Dreh- und/oder Schwenkbewegungen mit Hilfe von außen liegenden Anschlägen 27,27' (Fig. 1) begrenzt werden, die an den Seiten des Gelenkkörpers 1 angebracht sind und mit den Armen 10,10' zusammenwirken. Schließlich wäre es möglich, die um die Bolzenachse erfolgende Drehbewegung einfach dadurch zu begrenzen, daß der Gelenkkörper 1 an dem Ende des Schwenkbereichs gegen einen querliegenden Steg 30 des Lagerkörpers 7 stößt.

Das Dreh- und/oder Schwenkgelenk besitzt zum Verhüten des Eindringens von Schmutz und Staub und gleichzeitig zum Abdichten gegen herauslaufendes Schmiermittel vorzugsweie beidseitig des Gelenkkörpers 1 je einen an diesem angebrachten Faltenbalg 22 bzw. 22', der sich auf der kugelschalenförmigen Lagerfläche 6a des Lagerkörpers 6 abstützt.

Die Erfindung ist nicht auf das beschriebene Ausführungsbeispiel beschränkt, das im Rahmen der Erfindung auf vielfache Weise abgewandelt werden kann. Dies gilt insbesondere für die Form und Lage der Kanäle und Dichtungen. Außerdem können anstelle der Anschläge 21,21',27 und 27' auch andere Anschläge vorgesehen sein.

Schließlich ist die Erfindung nicht auf die Anwendung von nur zwei Strömungswegen beschränkt, da auch drei und mehr Strömungswege und entsprechend viele Kanäle und Aussparungen vorgesehen werden können, deren Zahl und Größe bei vorgegebener Gelenkgröße im wesentlichen nur von der Größe der zulässigen Dreh- und/oder Schwenkbewegungen abhängt. Dabei kann natürlich auch vorgesehen sein, die zwei oder mehr Strömungswege zum Transport von unterschiedlichen Fluiden für unterschiedliche Zwecke zu benutzen oder ein Dreh- und/oder Schwenkgelenk mit anderen Freiheitsgraden, als sie oben beschrieben sind, mit voneinander unabhängigen Strömungswegen zu versehen.

**Patentansprüche**

1) Dreh- und/oder Schwenkgelenk zur dreh- und/oder schwenkbaren Verbindung von zwei Gelenkkörpern, mit einem ersten, in einer Bohrung eines der Gelenkkörper (1) drehfest angeordneten, innen mit einer ersten kugelschalenförmigen Lagerfläche (4) versehenen Lagerkörper (3), mit einem zweiten, mit dem anderen Gelenkkörper (5) drehfest verbundenen Lagerkörper (6), der eine zweite, kugelförmige, an der ersten Lagerfläche (4) anliegende, äußere Lagerfläche (6a) aufweist, mit einem durch die beiden Gelenkkörper (1,5) und die Lagerkörper (3,6) führenden ersten Strömungsweg (12-14, 16-20) für ein Fluid und mit Dichtungen (23-26) zum Abdichten des Strömungswegs, dadurch gekennzeichnet, daß wenigstens ein zweiter, durch die beiden Gelenkkörper (1,5) und die Lagerkörper (3,6) führender, vom ersten Strömungsweg unabhängiger Strömungsweg (12'-14', 16'-20') und weitere Dichtungen (24'-26',28) zum Abdichten des zweiten Strömungswegs vorgesehen sind, daß jeder Strömungsweg eine in einem der Lagerkörper (6) ausgebildete, an dessen Lagerfläche (6a) grenzende taschenförmige Aussparung (18'18') und einen in dem anderen Lagerkörper (3) ausgebildeten, an dessen Lagerfläche (4) grenzenden Kanal (19,19') aufweist, und daß Anschläge zur Festlegung eines zulässigen Dreh- und/oder Schwenkbereichs der beiden Gelenkkörper (1,5) derart vorgesehen sind, daß jeder Kanal (19,19') in allen möglichen Dreh- und/oder Schwenklagen der Gelenkkörper (1,5) innerhalb dieses Bereichs in die ihm zugeordnete Aussparung (18,18') mündet.

2) Dreh- und/oder Schwenkgelenk nach Anspruch 1, dadurch gekennzeichnet, daß die Anschläge aus je einer in die Aussparung (18,18') ragenden, im Kanal (19,19') angeordneten Buchse (21,21') bestehen.

3) Dreh- und/oder Schwenkgelenk nach Anspruch 1 oder 2, dadurch gekennzeichnet, daß die Dichtungen (24,24') je ein eine zugeordnete Aussparung (18,18') umgebendes Dichtungsmittel enthalten, das in eine Nut eingelegt ist, die in einer der Lagerflächen (4,6a) ausgebildet ist.

4) Dreh- und/oder Schwenkgelenk nach einem der Ansprüche 1 bis 3, dadurch gekennzeichnet, daß die Aussparungen (18,18') jeweils beiderseits der Äquatorebene derjenigen kugelschalenförmigen Lagerfläche verlaufen, an die sie angrenzen.

5) Dreh- und/oder Schwenkgelenk nach einem der Ansprüche 1 bis 4, dadurch gekennzeichnet, daß eine der Aussparungen (18) auf einer Seite und die andere Aussparung (18') auf der anderen Seite einer Meridianebene derjenigen kugelschalenförmigen Lagerfläche angeordnet ist, an die sie angrenzt.

6) Dreh- und/oder Schwenkgelenk nach Anspruch 4 oder 5, dadurch gekennzeichnet, daß zwei in der Lagerfläche (6a) des zweiten Lagerkörpers (6) ausgebildete und auf je einer Seite der Meridianebene dieser Lagerfläche (6a) angeordnete Aussparungen (18,18') vorgesehen sind.

7) Dreh- und/oder Schwenkgelenk nach einem der Ansprüche 1 bis 6, dadurch gekennzeichnet, daß der zweite Lagerkörper (6) drehfest auf einem Bolzen (8) mit einer eine Drehachse des Gelenks festlegenden Achse befestigt ist und die Strömungswege aud den Kanälen (19,19'), den Aussparungen (18,18') und weiteren Kanälen in den Lagerkörpern, den Gelenkkörpern und dem Bolzen (8) gebildet sind.

8) Dreh- und/oder Schwenkgelenk nach Anspruch 7, dadurch gekennzeichnet, daß die im Lagerkörper (6) ausgebildeten Kanäle (17,17') radial zur Drehachse angeordnet sind.

9) Dreh- und/oder Schwenklager nach Anspruch 7, dadurch gekennzeichnet, daß die im Lagerkörper (6) ausgebildeten Kanäle (17,17') schräg zur Drehachse angeordnet sind.

**Claims**

1. Rotary and/or swivelling joint for rotary and/or swivelling connection of two articulated bodies, with a first bearing body (3) arranged fast against rotation in a bore of one of the articulated bodies (1) and provided internally with a first part-spherical bearing surface (4), with a second bearing body (6) connected fast against rotation to the other articulated body (5), and having a second spherical, outer bearing surface (6a) bearing on the first bearing surface (4), with a first flow path (12–14, 16–20) for a fluid passing through the two articulated bodies (1, 5) and the bearing bodies (3, 6), and with seals (23–26) for sealing the flow path, characterized in that there are provided at least one second flow path (12'–14', 16'–20') independent of the first flow part passing through the two articulated bodies (1, 5) and the bearing bodies (3, 6) and further seals (24'–26', 28) for sealing the second flow path, in that each flow path comprises a pocket-formed recess (18, 18') formed in one of the bearing bodies (6) and contiguous with the bearing surface (6a) thereof and a channel (19, 19') formed in the other bearing body (3) and contiguous with the bearing surface thereof, and in that stops are provided for determining a permissible rotational and/or swivelling range of the two articulated bodies (1, 5), such that each channel (19, 19') opens into the associated recess (18, 18') in all possible rotational and/or swivelling positions of the articulated bodies (1, 5).

2. Rotational and/or swivelling joint according to claim 1, characterized in that the stops each consist of a bush (21, 21') arranged in the channel (19, 19') and projecting into the recess (18, 18').

3. Rotational and/or swivelling joint according to claim 1 or 2, characterized in that the seals (24, 24') each comprise a sealing means surrounding an associated recess (18, 18'), which sealing means is fitted in a groove which is formed in one of the bearing surfaces (4, 6a).

4. Rotational and/or swivelling joint according to one of claims 1 to 3, characterized in that the recesses (18, 18') each run on both sides of the equatorial plane of that part-spherical surface which they adjoin.

5. Rotational and/or swivelling joint according to one of claims 1 to 4, characterized in that one of the recesses (18) is arranged on one side and the other recess on the other side of a meridian plane of that part-spherical bearing surface which they adjoin.

6. Rotational and/or swivelling joint according to claim 4 or 5, characterized in that two recesses (18, 18') are provided, formed in the bearing surface (6a) of the second bearing body (6) and arranged each on one side of the meridian plane of this bearing surface.

7. Rotational and/or swivelling joint according to one of claims 1 to 6, characterized in that the second bearing body (6) is fixed fast against rotation on a pin (8) with an axis determining the axis of rotation of the joint and the flow paths are formed from the channels (19, 19'), the recesses (18, 18') and further channels in the bearing bodies, the articulated bodies and the pin (8).

8. Rotational and/or swivelling joint according to claim 7, characterized in that the channels (17, 17') formed in the bearing vody (6) are arranged radially to the axis of rotation.

9. Rotational and/or swivelling joint according to claim 7, characterized in that the channels (17, 17') formed in the bearing vody (6) are arranged obliquely to the axis of rotation.

## Revendications

1. Articulation rotative et/ou pivotante pour l'assemblage rotatif et/ou pivotant de deux corps articulés, avec un premier corps de palier (3), fixé dans un alésage de l'un des corps articulés (1) et doté, côté interne, d'une première portée sphérique (4), avec un deuxième corps de palier (6), solidaire de l'autre corps articulé (5) et doté d'une deuxième portée externe (6a), sphérique, qui s'applique sur la première portée (4), avec un premier parcours d'écoulement (12–14, 16–20) pour un fluide, qui traverse les deux corps articulés (1, 5) et les corps de palier (3, 6), et avec des joints (23–26) pour garantir l'étanchéité du parcours d'écoulement, caractérisée en ce qu'un deuxième parcours d'écoulement (12'–14', 16'–20') au moins, indépendant du premier, est prévu au travers des deux corps articulés (1, 5) et des corps de palier (3, 6), ainsi que d'autres joints (24'–26', 28) garantissant l'étanchéité du deuxième parcours d'écoulement, en ce que chaque parcours d'écoulement présente un évidement (18, 18') en forme de poche, pratiqué dans l'un des corps de palier (6) et contigu à la portée (6a) de ce dernier, ainsi qu'un conduit (19, 19'), réalisé dans l'autre corps de palier (3) et limitrophe à la portée (4) de ce dernier, et en ce que des butées sont prévues pour définir une zone de rotation et/ou de pivotement admissible des deux corps articulés (1, 5), de manière que chaque conduit (19, 19') débouche dans l'évidement qui lui est affecté (18, 18'), dans toutes les positions possibles de rotation et/ou de pivotement des corps articulés (1, 5) à l'intérieur de cette zone.

2. Articulation rotative et/ou pivotante suivant la revendication 1, caractérisée en ce que les butées se composent respectivement d'une douille (21, 21'), disposée dans le conduit (19, 19') et pénétrant dans l'évidement (18, 18').

3. Articulation rotative et/ou pivotante suivant l'une des revendications 1 et 2, caractérisée en ce que les joints (24, 24') comportent respectivement un élément d'étanchéité, enveloppant un évidement (18, 18') et inséré dans une rainure, pratiquée dans l'une des portées (4, 6a).

4. Articulation rotative et/ou pivotante suivant l'une quelconque des revendications 1 à 3, caractérisée en ce que les évidements (18, 18') s'étendent de part et d'autre du plan équatorial de la portée sphérique, à laquelle ils sont limitrophes.

5. Articulation rotative et/ou pivotante suivant l'une quelconque des revendications 1 à 4, caractérisée en ce que l'un des évidements (18) est disposé sur un côté, et l'autre évidement (18') sur l'autre côté d'un plan méridien de la portée sphérique, à laquelle ils sont contigus.

6. Articulation rotative et/ou pivotante suivant l'une des revendications 4 et 5, caractérisée par deux évidements (18, 18'), pratiqués dans la portée (6a) du deuxième corps de palier (6) et disposés respectivement sur un côté du plan méridien de cette portée (6a).

7. Articulation rotative et/ou pivotante suivant l'une quelconque des revendications 1 à 6, caractérisée en ce que le deuxième corps de palier (6) est fixé sur un boulon (8), dont l'axe définit un axe de rotation de l'articulation, les parcours d'écoulement étant constitués par les conduits (19, 19'), les évidements (18, 18') et par d'autres conduits prévus dans les corps de palier, les corps articulés et le boulon (8).

8. Articulation rotative et/ou pivotante suivant la revendication 7, caractérisée en ce que les conduits (17, 17'), pratiqués dans le corps de palier (6), ont une disposition radiale par rapport à l'axe de rotation.

9. Articulation rotative et/ou pivotante suivant la revendication 7, caractérisée en ce que les conduits (17, 17'), pratiqués dans le corps de palier (6), ont une disposition oblique par rapport à l'axe de rotation.

6

# Fig.1.

Fig.2.